# EUROPEAN PATENT APPLICATION

(11) **EP 3 091 105 A1**
(43) Date of publication of application: **09.11.2016**
(21) Application number: 16166510.4
(22) Date of filing: 21.04.2016
(51) Int. Cl.: C23C 28/04, C23C 8/10, C23C 18/04, C23C 18/12, F28F 21/08, F28F 19/02

(54) **HIGH TEMPERATURE CORROSION RESISTANT COATING**

(30) Priority: 07.05.2015 US 201514706392
(71) Applicant: Honeywell International Inc., Morris Plains, NJ 07950 (US)
(72) Inventor: JADIDIAN, Bahram, Morris Plains, NJ New Jersey 07950 (US)
(74) Representative: Houghton, Mark Phillip

(57) **Abstract**

A corrosion resistant coating for a substrate comprises a buffer layer directly on the substrate, wherein the buffer layer is primarily a non-stoichiometric oxide; and an outer layer on the buffer layer, wherein the outer layer is a composition primarily in a tetragonal phase.

## Description

### BACKGROUND OF THE INVENTION

The present invention generally relates to products and methods for corrosion resistant coatings and, more particularly, for corrosions resistant coatings for nickel alloys.

Commercially pure nickel (Nickel 201) as a substrate can be useful in many environments. Nickel 201 can offer superior thermal conductivity/unit mass over substrates such as Type 444 stainless steel. However, pure nickel does not resist long term exposure to a corrosive mixed gas at high temperature (oxygen + SO2 + NO2 gases at > 450°C), such as in a heat exchanger. During the hot corrosion in a heat exchanger environment, nickel reacts with SO2, NO2 and oxygen to form nickel sulfate which is subsequently transformed into a non-protecting nickel oxide and nickel sulfide scale. With further reaction between nickel and the corrosive gas, nickel sulfate continues to form underneath the scale which is then converted into nickel oxide/nickel sulfide. The progress of this reaction/conversion can cause growth, cracking and ultimately spalling of the scale off the surface of the nickel alloy; consumption of the nickel alloy, and premature failure of the heat exchanger.

As can be seen, there is need for a product and method for an improved corrosion resistant coating for nickel alloys.

### SUMMARY OF THE INVENTION

In one aspect of the present invention, a corrosion resistant coating for a substrate comprises a buffer layer directly on the substrate, wherein the buffer layer is primarily a non-stoichiometric oxide; and a barrier layer on the buffer layer, wherein the barrier layer includes a primary component and a dopant component.

In another aspect of the present invention, a corrosion resistant coating for a substrate comprises a buffer layer directly on the substrate, wherein the buffer layer is an oxide of the substrate; and a barrier layer on the buffer layer, wherein the barrier layer is a composition primarily in a tetragonal phase.

In yet another aspect of the present invention, a method of coating a substrate comprises producing a non-stoichiometric oxide layer on the substrate; and applying a sol-gel composition to the oxide layer, wherein the sol-gel composition is primarily in a tetragonal phase.

These and other features, aspects and advantages of the present invention will become better understood with reference to the following drawings, description and claims.

### BRIEF DESCRIPTION OF THE DRAWINGS

FIG. 1A is a plan, elevated, schematic view of a coating according to an exemplary embodiment of the present invention;
FIG. 1 B is a table depicting coefficients of thermal expansion for the coating of FIG. 1A;
FIG. 2 includes x-ray diffraction profiles of undoped and doped barrier layers in coatings according to exemplary embodiments of the present invention;
FIG. 3 is a flow chart depicting a method of making a coating according to an exemplary embodiment of the present invention;
FIG. 4 is a flow chart depicting a method of making a component used in a method of making a coating according to an exemplary embodiment of the present invention;
FIG. 5 is a table showing mass changes of nickel substrates - coated versus uncoated - over time according to an exemplary embodiment of the present invention;
FIGS. 6A-6B are SEMs of nickel substrates - coated versus uncoated after exposure to corrosion.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features. However, any single inventive feature may not address any of the problems discussed above or may address only one of the problems discussed above. Further, one or more of the problems discussed above may not be fully addressed by any of the features described below.

The present invention generally provides a corrosion resistant coating for substrates such as nickel alloys. The coating can include a non-stoichiometric buffer layer or coating (such as nickel oxide) directly on the substrate, and an outer barrier layer or coating (such as stabilized (e.g., doped) zirconium dioxide) directly on the buffer layer/coating. The coating on the substrate can be accomplished by a sol-gel process under conditions that favor the existence of the tetragonal phase of a primary component (such as zirconium dioxide) in the outer barrier layer that will directly contact the corrosive environment, such as hot gases passing through a heat exchanger.

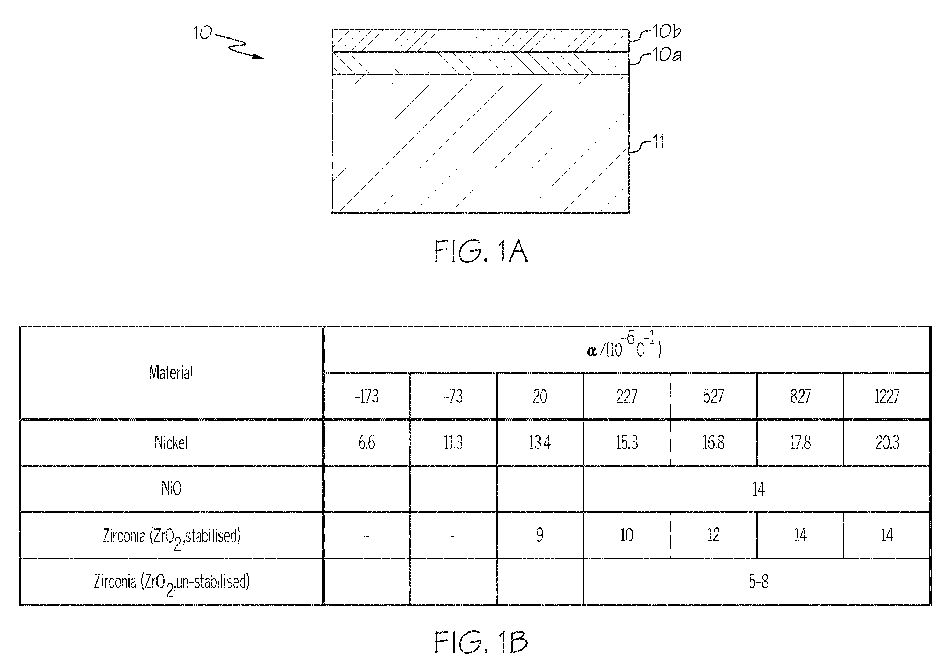

FIG. 1 is a schematic plan view of a coating 10 on a substrate 11 according to an embodiment of the present invention. In embodiments, the substrate 11 can be an alloy such as nickel, nickel 200 and nickel 201. The substrate 11 can be used in various environments, such as heat exchangers. For example, the substrate 11 can be a wall or fin of a heat exchanger.

The coating 10 may include a layer/coating 10a and a layer/coating 10b. The layer 10a can directly interface the substrate 11, while the layer 10b can sandwich the layer 10a between the layer 10b and the substrate 11. In embodiments, the layer 10a may be a buffer layer or transition layer that can provide a transition of thermal expansion between the substrate 11 and the layer 10b. Thereby, the layer 10a can promote adhesion between the outer barrier layer 10b and the substrate 11.

In embodiments, the coefficient of thermal expansion of the substrate 11 can be from about 7 to about 21 ppm/°C, or from about 11 to about 18 ppm/°C, or from about 12 to about 17 ppm/°C. In embodiments, the coefficient of thermal expansion of the outer barrier layer 10b can be from about 5 to about 18 ppm/°C, or from about 8 to about 14 ppm/°C, or from about 9 to about 13 ppm/°C. In embodiments, the coefficient of thermal expansion of the buffer layer 10a can be from about 5 to about 17 ppm/°C, or from about 10 to about 17 ppm/°C, or from about 13 to about 15 ppm/°C. Accordingly, a difference in the coefficient of thermal expansion between the substrate 11 and the outer barrier layer 10b can be from about 11 to about 16 ppm/°C, or from about 3 to about 10 ppm/°C, or from about 1 to about 8 ppm/°C.

In specific embodiments, FIG. 1 B is a table depicting, at various temperatures, coefficients of thermal expansion for a nickel substrate 11, a nickel oxide layer 10a, and a stabilized zirconium dioxide layer 10b. Also depicted for comparison is an unstabilized zirconium dioxide layer according to the prior art.

In various embodiments, the buffer layer 10a can be primarily a non-stoichiometric buffer composition. In other words, the buffer composition can include both a non-stoichiometric form and a green or stoichiometric form of the buffer composition. However, the non-stoichiometric form can comprise from about 1 to about 100%, or from about 50 to about 100%, or from about 80 to about 100% of the total amount of the composition.

According to certain embodiments, the buffer composition of the buffer layer 10a can comprise an oxide of the substrate 11. Accordingly, in embodiments, the buffer layer 10a can comprise nickel oxide, NiO. The thickness of the buffer layer 10a, in certain embodiments, can be from about 1 to about 250 nm, or from about 1 to about 200nm, or from about 1 to about 180 nm.

In various embodiments, the outer barrier layer 10b can include a primary component. In certain embodiments, the primary component can be an oxide, such as zirconium dioxide, ZrO2.

The outer barrier layer 10b may be stabilized by a dopant component that can be an oxide, such as yttrium oxide (Y2O3). Other dopants can be used such as calcia (CaO), ceria (CeO2), ytterbia (Yb2O3), magnesia (MgO), and gadolinia (Gd2O3). The dopant can be mixed with the primary component such that the dopant is present in an amount of from about 0.1 to 15 mol%, or from about 1 to about 10 mol%, or from about 2 to about 8 mol%.

The thickness of the outer barrier layer 10b, in certain embodiments, can be from about 1 to about 10,000 nm, or from about 5 to about 5000 nm, or from about 10 to about 3000 nm.

According to certain embodiments, the composition of the outer barrier layer 10b can exist primarily in a tetragonal phase, as opposed to a monoclinic phase. For example, the tetragonal phase may be present in an amount of from about 10 to about 100%, or from about 50 to about 100%, or from about 80 to about 100% of the total composition of the outer barrier layer 10b.

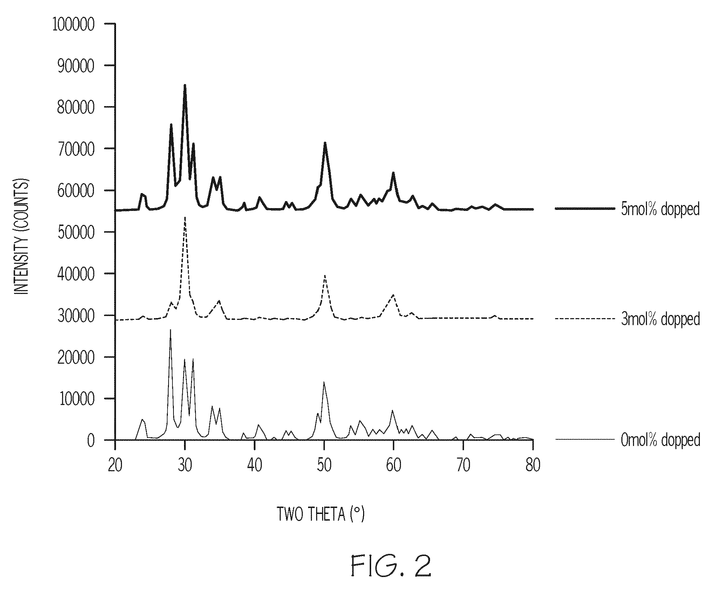

FIG. 2 shows examples of the tetragonal phase, namely, x-ray diffractions of a barrier layer 10b made of zirconium dioxide. In exemplary embodiments, the zirconium dioxide can be doped with yttrium oxide at 3 mol% or at 5 mol%, while the layer 10b is formed at between about 400°C to about 1100°C. For comparison purposes, in FIG. 2, zirconium dioxide is undoped and a corresponding layer is formed at between about 400°C to about 1100°C. In FIG. 2, it can be seen that at 3 mol% doping, the tetragonal phase predominates at a formation temperature. At 5 mol% doping, the tetragonal phase predominates but to a lesser extent in comparison to 3 mol%. In further contrast, with the undoped zirconium dioxide, the tetragonal phase does not predominate at the stated temperatures between 400°C to 1100°C. Herein, "predominates" means major phase present in the coating with the highest intensity of x-ray diffraction peak.

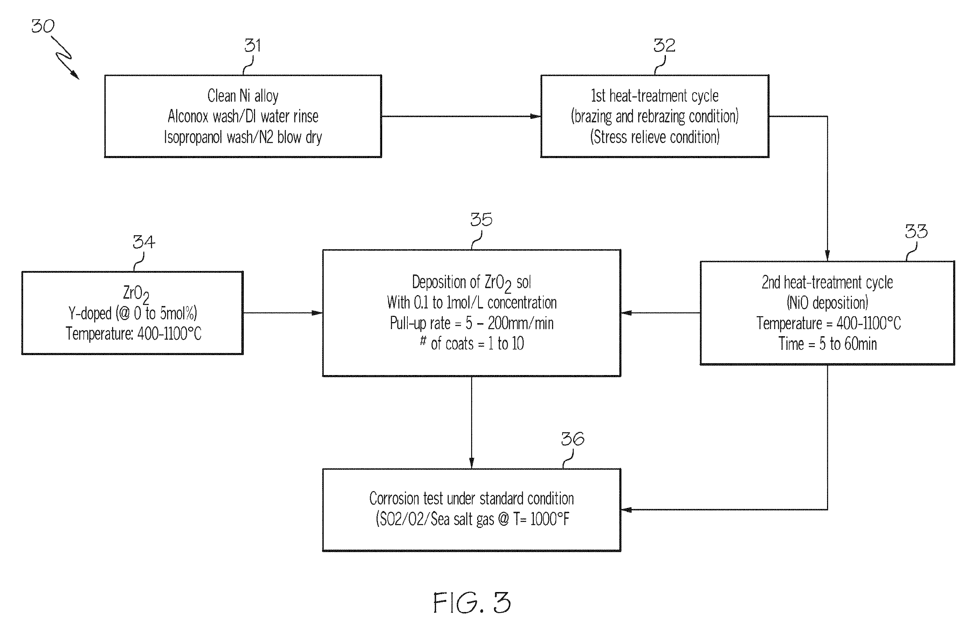

FIG. 3 is a flowchart depicting a method 30 of making a corrosion resistant coating according to an embodiment of the present invention. A step 31 may include cleaning/washing the substrate 11 such as with Alconox™ and rinsing with deionized water. That can be followed by another cleaning/washing such as with isopropanol and then drying with nitrogen gas. A sufficient amount of cleaning, rinsing and drying can be determined by the waterbreak test. ASTM F22 describes a version of this test.

A step 32 can include a first heat treatment cycle that may involve brazing and rebrazing a plurality of substrates, together, in a stacked configuration, such as a plurality of fins for a heat exchanger. The cycle of brazing and rebrazing can relieve stress on the substrates otherwise imparted by just brazing.

A step 33 can include a second heat treatment cycle that may involve depositing a buffer layer directly on a substrate. In embodiments, the step of depositing a buffer layer can include heating the substrate to form a buffer layer made of an oxide of the substrate, such as nickel oxide when the substrate is a nickel alloy. In certain embodiments, the heating can occur at a temperature of from about 400 to about 1100°C, or from about 400 to about 900°C, or from about 500 to about 650°C. The duration of heating can be, for example, of from about 5 to about 240 minutes, or from about 5 to about 180 minutes, or from about 5 to about 60 minutes. The foregoing can occur at atmospheric pressure.

In a step 34, a making of an outer barrier layer composition can include making a sol-gel composition having a primary component and a dopant component. In embodiments, the primary component may be an oxide, such as zirconium dioxide, zirconium butoxide, zirconium isopropoxide, zirconium oxynitrate dehydrate, zirconium acetate, zirconium 2 ethylhexanoate, and other salts/precursors of zirconium. The primary component may be dispersed and or dissolved in an organic solvent such as alcohol, 2-methoxyethanol, acetic acid, mineral spirit, or water. In embodiments, the dopant may be an oxide, such as yttrium oxide and or a precursor/salt of yttrium, such as yttrium ethylhexanoate, yttrium isopropoxide, yttrium butoxide, yttrium nitrate, and yttrium acetate. The dopant may be dispersed and or dissolved in a solvent such as water, alcohol, 2-methoxyethanol, or mineral spirit.

The molar ratio of the primary component and dopant component may be that as noted above. In embodiments, the dissolved primary component and dissolved dopant may be mixed and have a final sol composition concentration of about 0.1 to about 2.0mol/L, or about 0.1 to about 1.0 mol/L, or about 0.1 to about 0.75 mol/L. The temperature at which the final sol composition may be mixed can be from about -30 to about 120°C, or from about 20 to about 120°C, or from about 25 to about 80°C. Mixing can occur from about 10 to about 600 minutes, or from about 10 to about 360 minutes, or from about 10 to about 240minutes.

In a step 35, a depositing of a barrier layer on the buffer layer can include depositing the sol composition from step 34 directly onto the buffer layer. The step of depositing can include dip coating one or more substrates, each with a buffer layer, into the sol composition and then extracting/drawing it out of the sol composition. Alternatively, the step of depositing can include pouring the sol composition over one or more substrates, each with a buffer layer. In either fashion, the outer layer can be deposited at an effective deposition rate. For example, in dip-coating, the deposition rate can be a pull-up rate or rate at which the substrate, after it is dipped into the sol composition, is extracted from or pulled out of the sol composition.

In an example of dip coating for step 35, an extraction or pull-out rate can be from about 10 to about 200 mm/min, or from about 10 to about 150 mm/min, or from about 10 to about 80 mm/min. In an example of pouring for step 35, a flow rate of sol over the substrate can be determined based upon the substrate size to represent an equivalent pull-out rate described above.

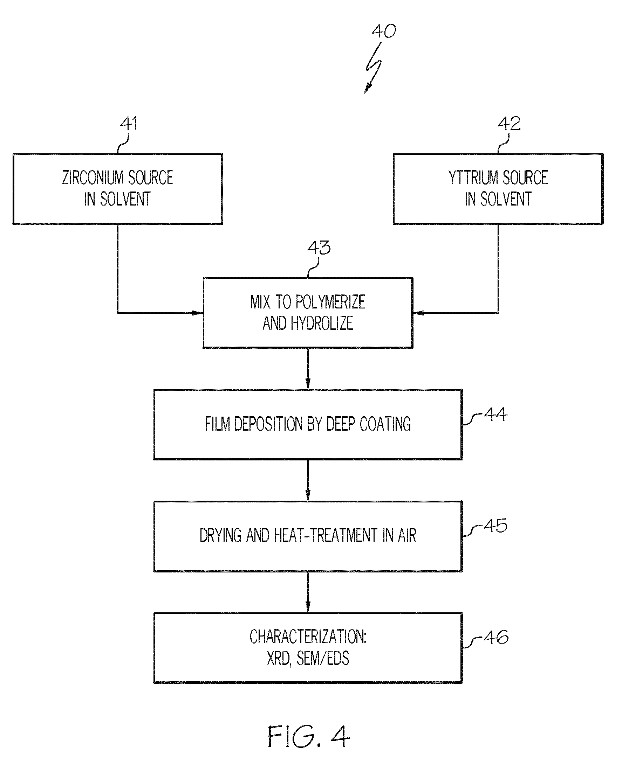

In a step 36, a testing of the coating on the substrate may occur. Such testing can occur following completion of the sol-gel process, as further shown in FIG. 4. In addition, the testing can occur following the second heat treatment 33 but before coating with the sol composition - in order to create a basis for comparison with the coated substrate. The step 36 can test for an absence/presence of corrosion after, for example, 300, 500, and 1000 hours of corrosion exposure. Such corrosion exposure can be accomplished by exposure to a corrosive gas having, for example, SO2, NO2, air, and/or salt brine (i.e., sea salt) at 538°C. The SO2 may flow at about 3.6 ml/min, the NO2 may flow at about 18 ml/min, the air may flow at about 2L/min, and the salt brine may be at about 3000ppm.

FIG. 4 is a flow chart of a sol-gel process 40 that can be a part of the method 30 shown in FIG. 3. In particular, the sol-gel process may be a part of steps 34 and 35 that are completed before the step 36 of testing. In FIG. 4, a step 41 may include dissolving a primary component, such as zirconium butoxide, zirconium isopropoxide, zirconium oxynitrate dehydrate, zirconium acetate, zirconium 2-ethylhexanoate, in a solvent, such as ethanol, propanol, isopropanol, 2-methoxyethanol, and Stoddard solvent. A step 42 may include dissolving a dopant component, such as yttrium ethylhexanoate, yttrium isopropoxide, yttrium butoxide, yttrium nitrate, yttrium acetate, yttrium nitrate hexahydrate, in a solvent, such as ethanol, propanol, isopropanol, 2-methoxyethanol, and water.

In a step 43, mixing of the two dissolved components may enable polymerization and the formation of a gel. A step 44 may include depositing the sol-gel composition, from step 43, in the form of a layer onto a substrate, such as by dip coating. A step 45 may include heating and drying the sol-gel layer. The heating/drying may occur at a temperature of from about 25 to about 450°C, or from about 50 to about 350°C, or from about 70 to about 250°C. The duration of heating can be from about 5 to about 240 minutes, or from about 20 to about 180 minutes, or from about 30 to about 120 minutes.

In a step 46, the sol-gel layer on the substrate may be characterized, such as by x-ray diffraction and/or SEM/EDS.

### EXAMPLES

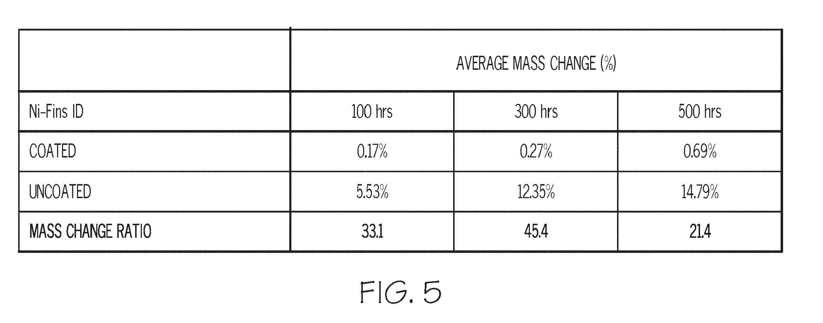

FIG. 5 is a table showing the results of samples according to the invention upon corrosion testing, such as that in step 36 of FIG. 3. Over a period of 500 hours, the present invention of a coated substrate exhibited substantially less change in mass in comparison to substrates that were uncoated. Less change in mass can equate to less corrosion. The mass change ratio referenced in FIG. 5 is the ratio of mass change % of the uncoated substrate to the mass change % of the coated substrate according to the present invention.

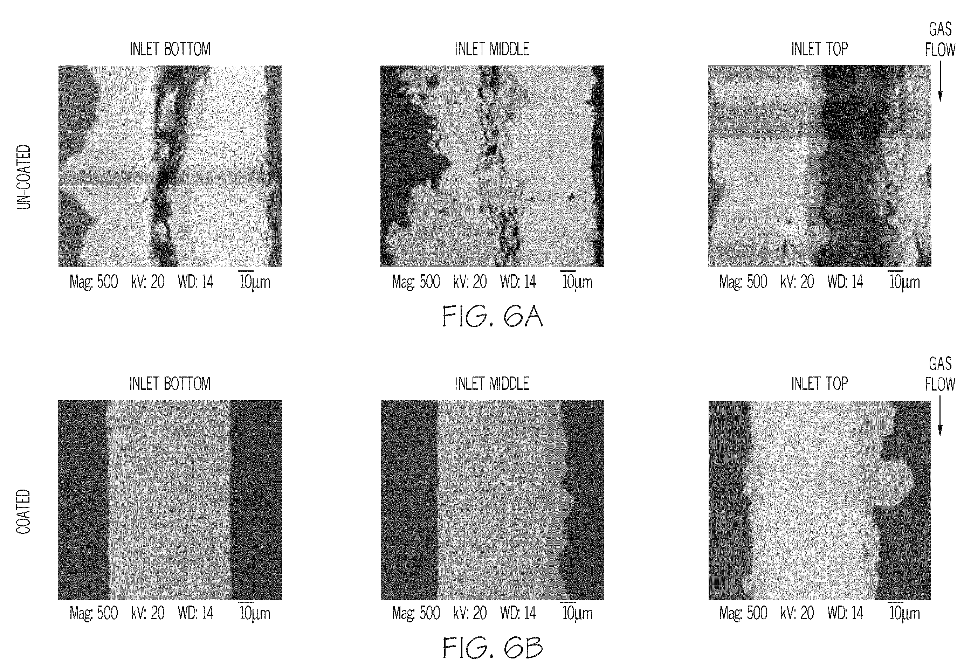

FIG. 6A includes SEMs of uncoated substrates and FIG. 6B includes SEMs of coated substrates according to the present invention, after 500 hours of corrosive exposure. The SEMs were taken as corrosive gas flows from the top of the SEMs towards the bottom of the SEMs. The references to "bottom", "middle", and "top" refer to the bottom, middle, and top cross sectional areas of the substrate. In FIG. 6A, the dark vertical area between the two light areas represents a gap between the substrate to the right and the corrosion to the left. In FIG. 6B, it can be seen that no gap is visible - meaning that there is relatively less corrosion.

It should be understood, of course, that the foregoing relates to exemplary embodiments of the invention and that modifications may be made without departing from the spirit and scope of the invention as set forth in the following claims.

## Claims

1. A corrosion resistant coating for a substrate, comprising:
a buffer layer directly on the substrate, wherein the buffer layer is primarily a non-stoichiometric oxide;
an outer layer on the buffer layer, wherein the outer layer includes a primary component and a dopant component.

2. The coating of claim 1, wherein the substrate comprises a nickel alloy.

3. The coating of any one of claims 1-2, wherein the buffer layer comprises an oxide of the substrate.

4. The coating of any one of claims 1-3, wherein the buffer layer comprises nickel oxide.

5. The coating of any one of claims 1-4, wherein the buffer layer has a buffer coefficient of thermal expansion of about 14.0 at a temperature of from about -173°C to about +1127°C.

6. The coating of any one of claims 1-5, wherein the non-stoichiometric oxide comprises about 80% to about 100% of the total buffer layer.

7. The coating of any one of claims 1-6, wherein the buffer layer has a thickness of from about 1 to about 250nm.

8. The coating of any one of claims 1-6, wherein the buffer layer is made by oxidation.
